# EUROPEAN PATENT APPLICATION

(11) **EP 2 657 662 A1**
(43) Date of publication of application: **30.10.2013**
(21) Application number: 11850020.6
(22) Date of filing: 22.06.2011
(51) Int. Cl.: G01F 23/00, G01F 17/00

(54) **DETECTING DEVICE AND PUMPING EQUIPMENT FOR CONCRETE**

(30) Priority: 21.12.2010 CN 201010598509
(71) Applicant: Hunan Sany Intelligent Control Equipment Co., Ltd, Hunan 410100 (CN); Sany Heavy Industry Co., Ltd., Changsha Hunan 410100 (CN)
(72) Inventor: DENG, Kan, Hunan 410100 (CN); ZHOU, Jihui, Hunan 410100 (CN); ZHOU, Xiang, Hunan 410100 (CN)
(74) Representative: Viering, Jentschura & Partner
(86) International application number: PCT/CN2011/076098
(87) International publication number: WO 2012/083656

(57) **Abstract**

A detecting device for detecting the volume of a material in a material container and a concrete pumping apparatus comprising the above detecting device are disclosed. The detecting device comprises a soft container full of a medium; a medium container in communication with the soft container; a volume detecting sensor for detecting the volume of the medium in the medium container; the soft container is provided within the material container and immersed in the material of the material container, and under the extrusion of the material, the medium in the soft container enters the medium container, the volume detecting sensor detects the volume of the medium in the medium container; and the volume of the material can be calculated according to a preset relationship between the volume of the medium in the medium container and the volume of the material in the material container.

## Description

The present application claims the priority to the Chinese invention patent application No. 201010598509.2 filed with the State Intellectual Property Office of the PRC on December 21, 2010 and entitled "A Detecting Device and A Concrete Pumping Apparatus", which is incorporated herein by reference in its entirety.

### FIELD OF THE INVENTION

The present invention relates to a technical field of concrete pumping apparatus, especially to a detecting device for detecting the volume of a material in a material container. The present invention also relates to a concrete pumping apparatus comprising the detecting device.

### BACKGROUND OF THE INVENTION

Concrete pumping apparatuses are power apparatuses for delivering concrete, and common concrete pumping apparatuses comprise a concrete pump truck, a trailer-mounted concrete pump, a vehicle-mounted pump, a wet spraying machine and etc.

Currently, concrete construction usually comprises two processes of transporting the concrete and pumping the concrete. Usually a concrete transporting mixer is used to transport the concrete from a concrete mixing station to a construction site, a concrete pump truck is arranged at the construction site, the concrete transporting mixer pours the concrete into the hopper of the concrete pump truck, then the concrete pump truck transports the concrete in the hopper to the construction site, and thus the concrete can be transported and pumped.

When the concrete transporting mixer pours the concrete into the hopper of the concrete pump truck, there exists the following problems: as the volume of the hopper is fixed, if the concrete is poured at a high speed, there will be too much concrete in the hopper, then the poured concrete will spill from the hopper, thus the concrete will be wasted; if the concrete is poured at a low speed, there will be little concrete in the hopper, then the pumping system of the concrete pump truck will face the problem of empty suction, which will affect the pumping efficiency and will also cause large-scale vibration of an arm frame.

Therefore, to solve the above problems, the speed of pouring the concrete should be controlled according to the volume of the concrete in the hopper. To effectively control the speed of pouring the concrete, the volume of the concrete in the hopper of the concrete pump truck should be detected in real time.

Thus, how to detect the volume of the concrete in the hopper of the concrete pump truck in real time has been a technical problem for those skilled in the art.

### SUMMARY OF THE INVENTION

The first object of the present invention is to provide a detecting device for detecting the volume of a material in a material container, and the detecting device can detect the volume of the material in the material container in real time, so as to control the speed of the pouring the material. The second object of the present invention is to provide a concrete pumping apparatus comprising the detecting device.

To achieve the first object, the present invention provides a detecting device for detecting the volume of a material in a material container, comprising:
a soft container full of a medium;
a medium container in communication with the soft container; and
a volume detecting sensor for detecting the volume of the medium in the medium container;
the soft container is provided in the material container and is immersed in the material in the material container, under the extrusion of the material, the medium in the soft container enters the medium container, and the volume detecting sensor detects the volume of the medium in the medium container; the volume of the material is calculated according to a preset relationship between the volume of the medium and the volume of the material in the material container.

Preferably, the bottom of the soft container is fixed with the bottom of the material container, and the side of the soft container abuts against the sidewall of the material container.

Preferably, the medium container is a medium case, the volume detecting sensor is a material level sensor for detecting the liquid surface height of the medium in the medium case, and the material level sensor is provided within the medium case.

Preferably, the medium container is a piston cylinder, and the rodless chamber of the piston cylinder is in communication with the soft container.

Preferably, the volume detecting sensor is a displacement sensor for detecting the displacement of the piston of the piston cylinder.

Preferably, the volume detecting sensor is a rope sensor for detecting the displacement of the piston of the piston cylinder.

Preferably, the medium is a liquid, slurry or jelly.

The detecting device provided by the present invention for detecting the volume of the material in the material container comprises a soft container, a medium container and a volume detecting sensor; the soft container is full of a medium and is provided within the material container, the medium bottom of the soft container can be flush with the bottom of the material in the material container, and when the material is placed in the material container, the soft container is immersed in the material and will deform due to the extrusion of the material, and then the medium in the soft container will be extruded; the medium container is in communication with the soft container, and the volume detecting sensor is used to detect the volume of the medium in the medium container.

Under the extrusion of the material in the material container, the medium in the soft container full of the medium will be extruded and then enters the medium container, the volume detecting sensor detects the volume of the medium in the medium container, and the volume of the material can be calculated according to a preset relationship between the volume of the medium in the medium container and the volume of the material in the material container.

The detecting device for detecting the volume of the material in the material container can detect the volume of the material in the material container in real time, and can control the speed of supplying the material according to the volume of the material, so that there will not be too much material in the material container and then there will be no excessive material spilling from the material container, which avoids wasting the material; also, the material in the material container will not be insufficient, thus the problem of empty suction of the pumping apparatus will not appear.

For the detecting device with this structure, a soft container is provided within the material container, the volume of the material in the material container can be calculated by detecting the amount of the medium extruded from the soft container and according to a preset relationship between the amount of the extruded medium and the material in the material container, and the volume detecting sensor detecting the volume of the medium will not be in contact with the material, which could lessen the influence of the material on the volume detecting sensor, thus the volume detecting sensor has a long service life; this detecting device is of a simple structure, the detecting method therefore is simple, and the cost is low.

To achieve the second object, the present invention also provides a concrete pumping apparatus comprising the above detecting device for detecting the volume of a material in a material container, and the material container is the hopper of the concrete pumping apparatus. As the above detecting device has the above technical effect, the concrete pumping apparatus comprising the detecting device should also have corresponding technical effect.

Preferably, the concrete pumping apparatus is a concrete pump truck or a trailer-mounted concrete pump.

### BRIEF DESCRIPTION OF THE DRAWINGS

Figure 1 is a schematic view of the structure of a specific embodiment of the detecting device provided by the present invention;
Figure 2 is a schematic view of the working principle of the detecting device shown in Figure 1;
Figure 3 is a schematic view of the structure of another specific embodiment of the detecting device provided by the present invention;

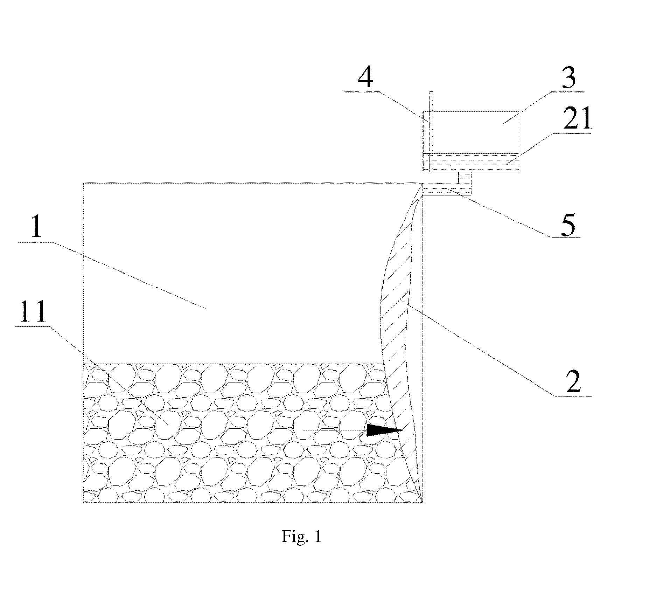

Wherein, in Figures 1-3:
Material container 1, material 11, soft container 2, medium 21, medium container 3, material level sensor 4, connecting pipe 5, piston cylinder 6, piston rod 61, mass block 62.

### DETAILED DESCRIPTION OF THE PRESENT INVENTION

To have those skilled in the art better understand the technical solutions of the present invention, the present invention will be further detailed hereinafter in conjunction with the accompanying drawings and the specific embodiments.

Referring to Figure 1, Figure 1 is a schematic view of the structure of a specific embodiment of the detecting device provided by the present invention.

As shown in Figure 1, the detecting device provided by the present invention for detecting the volume of the material in the material container comprises a soft container 2, a medium container 3 and a volume detecting sensor.

The soft container 2 is full of a medium 21 which can be a flowing or semi-flowing substance, such as a liquid, slurry or jelly; the soft container 2 is provided within the material container 1, the medium bottom of the soft container 2 can be flush with the bottom of the material 11 in the material container 1, and when the material is placed in the material container 1, the soft container 2 is immersed in the material and will deform due to the extrusion of the material, and then the medium in the soft container 2 will be extruded.

The medium container 3 has a certain volume and is in communication with the soft container 2, the medium 21 extruded from the soft container 2 will enter the medium container 3, and the volume detecting sensor is used to detect the volume of the medium 21 in the medium container 3.

Under the extrusion of the material in the material container 1, the medium in the soft container 2 full of the medium will be extruded and then enters the medium container 3, the volume detecting sensor detects the volume of the medium in the medium container 3, and the volume of the material can be calculated according to a preset relationship between the volume of the medium in the medium container 3 and the volume of the material in the material container 1.

The detecting device for detecting the volume of the material in the material container can detect the volume of the material in the material container 1 in real time, and can control the speed of supplying the material according to the volume of the material, so that there will not be too much material in the material container 1 and then there will be no excessive material spilling from the material container 1, which avoids wasting the material; also, the material in the material container 1 will not be insufficient, thus the problem of empty suction of the pumping apparatus will not appear.

For the detecting device with this structure, the soft container 2 is provided within the material container, the volume of the material in the material container 1 can be calculated by detecting the amount of the medium extruded from the soft container 2 and according to a preset relationship between the amount of the extruded medium and the material in the material container 1, and the volume detecting sensor detecting the volume of the medium will not be in contact with the material, which could lessen the influence of the material on the volume detecting sensor, thus the volume detecting sensor has a long service life; this detecting device is of a simple structure, the detecting method therefore is simple, and the cost is low.

In a specific solution, the soft container 2 may be in a bag shape, the bottom of the soft container 2 is fixed with the bottom of the material container 1, a side of the soft container 2 abuts against the sidewall of the material container 1, when the material squeezes the soft container 2, the soft container 2 abuts against the sidewall of the material container 1 so that the medium is extruded from the soft container 2, and in this structure, the soft container 2 is provided close to the sidewall of the material container 1, thus the soft container 2 will not affect operations such as stirring and pumping the material in the material container 1.

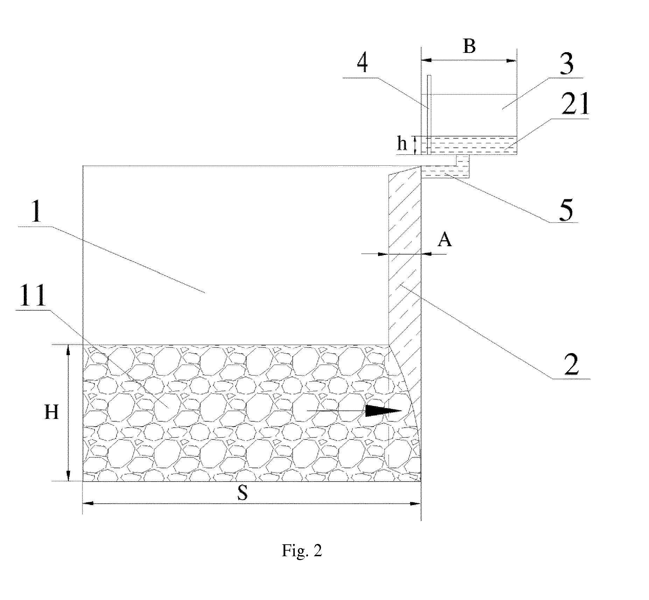

In another specific solution, as shown in Figures 1 and 2, the medium container 3 can be a medium case which is in a case shape, and the medium case can be provided above the material container 1 and can be in communication with the soft container 2 via the connecting pipe 5; the volume detecting sensor can be a material level sensor 4 for detecting the liquid surface height of the medium in the medium case, and the material level sensor 4 can be provided in the medium case.

The detecting device of this structure operates in the following principle:
As shown in Figure 2, the bottom area of the material container 1 is S, the height of the material is H, the section area of the soft container 2 is A, the bottom area of the medium case is B, and the height of the medium in the medium case is h. Suppose the height h of the filling medium in the medium case is 0 and the medium just covers the bottom of the medium case when there is no material in the material container 1,
according to the principle of equal volumes,
A*H=B*h;
The material height H=B*h/A=(B/A)*h;
Material volume V=S*H=(S*B/A)*h;
Suppose k1=(B/A), k2=(S*B/A);
The material height H=k1*h; and
The material volume V=k2*h.

As the bottom area S of the material container 1, the section area A of the soft container 2 and the bottom area B of the medium case are fixed values, then k1 and k2 are both constants, thus the material height is in direct ratio to the height of the medium in the medium case, the material volume is in direct ratio to the height of the medium in the medium case, then the height and the volume of the material in the material container 1 can be measured as long as the medium height h can be measured.

Therefore, the material level sensor 4 provided in the medium case can measure the medium height h, and then the volume of the material in the material container 1 can be measured from the above formula.

In another specific solution, the material level sensor 4 can be a water level sensor and etc. Any detecting device that can detect the height of the medium in the medium case can serve as the material level sensor 4 in the present invention.

For the detecting device provided by the present invention, the material 11 in the material container 1 can be concrete, cement, semi-flowing slurry, a large-gravity liquid, and etc.

In the above embodiments, the medium container 3 is in the form of a medium case, and the volume of the material in the material container 1 can be obtained via the height of the medium in the medium case. The detecting device provided by the present invention for detecting the volume of the material in the material container is not restricted to this, and the medium container 3 may be in the form of a piston cylinder, which will be briefed in the following embodiment.

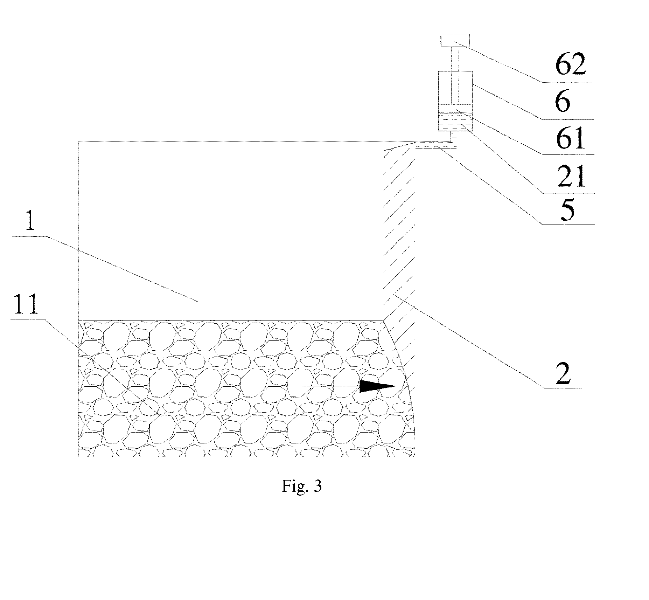

Referring to Figure 3, Figure 3 is a schematic view of the structure of another specific embodiment of the detecting device provided by the present invention.

As shown in Figure 3, the detecting device provided in this embodiment comprises a soft container 2, a piston cylinder 6 and a volume detecting sensor, the rodless chamber of the piston cylinder 6 is in communication with the soft container 2 via the connecting pipe 5, under the extrusion of the material in the material container 1, the medium in the soft container 2 full of the medium will be extruded and enter the piston cylinder 6, then the medium will push the piston to have displacement, and the volume of the medium in the rodless chamber is equal to the product of the section area of the rodless chamber and the displacement of the piston; as the section area of the piston is fixed, then the displacement of the piston is in a certain ratio to the height of the material in the material container 1, the displacement of the piston is also in a certain ratio to the volume of the material in the material container 1, thus the height and the volume of the material in the material container 1 can be obtained as long as the displacement of the piston can be obtained.

In another specific solution, the volume detecting sensor can be a displacement sensor for detecting the displacement of the piston; in another specific solution, the displacement sensor can be provided at the piston rod 61 of the piston cylinder, and in another more specific solution, the displacement sensor can be provided at the mass block 62 at the end of the piston rod 61.

In a preferable solution, the volume detecting sensor can also be a rope sensor which can accurately detect the displacement of the piston.

The other specific embodiments are similar to the above ones and are omitted here.

The present invention also provides a concrete pumping apparatus comprising the above detecting device for detecting the volume of the material in the material container, and the material container is the hopper of the concrete pumping apparatus. As the above detecting device has the above technical effect, the concrete pumping apparatus comprising the detecting device should also have corresponding technical effect, which is omitted here.

The concrete pumping apparatus can be a concrete pump truck, a concrete trailer-mounted concrete pump and etc.

Described above are just preferable embodiments of the present invention. It should be indicated that the literal description is restricted and there are infinite specific structures in fact. For those skilled in the art, improvements and modifications can be made to the present invention without departing from the principle of the present invention, and such improvements and modifications should also be contained within the scope of protection of the present invention.

## Claims

1. A detecting device for detecting the volume of a material in a material container (1), **characterized by**, comprising:
a soft container (2) full of a medium;
a medium container (3) in communication with the soft container (2); and
a volume detecting sensor for detecting the volume of the medium in the medium container (2);
the soft container (2) being provided in the material container (1) and immersed in the material in the material container (1), under the extrusion of the material, the medium in the soft container (2) enters the medium container (3), and the volume detecting sensor detecting the volume of the medium in the medium container (3); calculating the volume of the material according to a preset relationship between the volume of the medium in the medium container and the volume of the material in the material container (1).

2. The detecting device according to claim 1, **characterized in that** the bottom of the soft container (2) is fixed with the bottom of the material container (1), and the side of the soft container (2) abuts against the sidewall of the material container (1).

3. The detecting device according to claim 1 or 2, **characterized in that** the medium container (3) is a medium case, the volume detecting sensor is a material level sensor (4) for detecting the liquid surface height of the medium in the medium case, and the material level sensor (4) is provided within the medium case.

4. The detecting device according to claim 1 or 2, **characterized in that** the medium container is a piston cylinder (6), and the rodless chamber of the piston cylinder (6) is in communication with the soft container (2).

5. The detecting device for detecting the volume of a material in a material container according to claim 4, **characterized in that** the volume detecting sensor is a displacement sensor for detecting the displacement of the piston of the piston cylinder.

6. The detecting device for detecting the volume of a material in a material container according to claim 4, **characterized in that** the volume detecting sensor is a rope sensor for detecting the displacement of the piston of the piston cylinder.

7. The detecting device for detecting the volume of a material in a material container according to claim 1, **characterized in that** the medium is a liquid, slurry or jelly.

8. A concrete pumping apparatus, **characterized in that** the concrete pumping apparatus comprises the detecting device according to any of claims 1-7, and the material container is the hopper of the concrete pumping apparatus.

9. The concrete pumping apparatus according to claim 8, **characterized in that** the concrete pumping apparatus is a concrete pump truck or a trailer-mounted concrete pump.
